# EUROPÄISCHE PATENTSCHRIFT

(11) **EP 3 257 470 B1**
(45) Veröffentlichungstag und Bekanntmachung des Hinweises auf die Patenterteilung: **24.07.2019**
(21) Anmeldenummer: 16174997.3
(22) Anmeldetag: 17.06.2016
(51) Int. Cl.: A61C 13/15

(54) **LICHTHÄRTGERÄT MIT STEUERSCHALTUNG**
LIGHT CURING DEVICE WITH CONTROL CIRCUIT
APPAREIL DE DURCISSEMENT A LA LUMIERE DOTE D'UN CIRCUIT DE COMMANDE

(43) Veröffentlichungstag der Anmeldung: 20.12.2017
(73) Patentinhaber: Ivoclar Vivadent AG, 9494 Schaan (LI)
(72) Erfinder: Tommasini, Dario, 7303 Mastrils (CH)
(74) Vertreter: Baronetzky, Klaus

(56) Entgegenhaltungen:
- WO-A1-96/34578
- WO-A1-2011/077290
- JP-A- 2003 199 775
- US-A1- 2015 374 454

## Beschreibung

Die Erfindung betrifft ein Lichthärtgerät.

Lichthärtgeräte werden seit mehr als 30 Jahren als Handgeräte verwendet, um die Lichthärtung auch an schwer zugänglichen Stellen, wie beispielsweise Engstellen in extrakorporalen Prothesen oder auch mesiale Bereiche an Zähnen von Patienten mit dentalen Restaurationsteilen erreichen zu können.

Hierzu weist das Lichthärtgerät einen schlanken Lichtleitstab auf, der typischerweise endseitig abgekröpft ist und in einem Gehäuse gehalten ist. Das Gehäuse nimmt eine Steuerschaltung und eine Energiequelle für eine Lichtquelle des Lichthärtgeräts auf. Das Gehäuse ist typischerweise entweder stab- oder pistolenförmig oder weist eine Mischform dieser beiden Formen auf.

Grund hierfür ist die Optimierung der Handhabbarkeit, nachdem manche Zahnärzte - oder auch Zahntechniker - für extrakorporale Arbeiten die Lichthärtgeräte bevorzugt nach der Art einer Pistole halten, andere nach der Art eines Bleistifts, und wieder andere gerne den Korpus des Lichthärtgeräts übergreifen.

Ein Lichthärtgerät wird typischerweise in einem programmgesteuerten Härtezyklus betrieben, wobei der Benutzer zunächst das Betriebsprofil auswählt und dann den Härtezyklus auslöst.

Hierzu gehört gegebenenfalls auch ein Vorhärtzyklus mit einem gegebenenfalls anderem Emissionsspektrum des abgegebenen Lichts.

Nachdem das Initialisieren des Lichthärtgeräts typischerweise einige Sekunden benötigt, und eine dementsprechende Startverzögerung inakzeptabel ist, wird typischerweise das Lichthärtgerät zunächst eingeschaltet, bevor der eigentliche Betriebszyklus stattfindet. Für das Einschalten des Lichthärtgeräts wird in klassischer Weise ein Einschaltknopf eingesetzt, der beispielsweise nach der Art eines Auslösers einer Pistole an dem Übergang zwischen Handgriff und Hauptgehäuse des Lichthärtgeräts angeordnet sein kann. Der Einschaltknopf kann aber auch - gerade bei stiftförmigen Lichthärtgeräten - auf der Oberseite des Lichthärtgeräts angeordnet sein und ist typischerweise getrennt und unabhägig von dem Auslöseknopf für das betreffende Programm des Lichthärtgeräts.

Lichthärtgeräte haben heutzutage häufig - unabhängig von der gewählten Gehäuseform - ein kleines Display, auf dem die wesentlichen Betriebsparameter angegeben werden und welches auch Handhabungshinweise geben soll.

Dennoch besteht hier gerade bei wenig technikaffinen Zahnärzten Optimierungsbedarf. Typischerweise werden die Lichthärtgeräte, wenn sie akkugespeist sind, auf einer Unterlage oder Basisstation aufgeladen. Dies geschieht über Kontakte, die an der Oberseite der Basisstation eingelassen sind und die die Spannungsversorgung für entsprechende Gegenkontakte am Handgerät bieten.

Es ist nun bereits vorgeschlagen worden, die Entnahme des Handgeräts aus der Ladestation als Signal für das Einschalten des Lichthärtgeräts in den Bereitschaftszustand zu verwenden und zugleich das Wiedereinsetzen in die Basisstation als Ausschaltsignal zu verwenden.

Ein typischer Zahnarzt ist jedoch durch die Patientenbehandlung von der Handhabung des Lichthärtgeräts abgelenkt, so dass er das Lichthärtgerät häufig neben der Ladestation ablegt.

Entweder wird dann permanent der Akku entladen, oder das Ladegerät schaltet sich nach einer gewissen Zeit selbsstsändig ab. Im ersten Fall ist dann häufig der Akku leer, wenn das Gerät erneut benötigt wird, und im zweiten Fall steht es nicht zur Verfügung, ohne dass der Initialisierungszyklus separat eingeschaltet und durchlaufen werden müsste.

US 2015/374454 A1 offenbart ein Lichthärtegeräte gemäß dem Oberbegriff von Anspruch 1.

Um die Zeitverzögerung in diesen recht häufigen Fällen gering zu halten, hat man versucht den Initialisierungszyklus abzukürzen. Beispielsweise wird auf Kallibrierungsschritte verzichtet, oder diese werden nur jedes fünfte Mal durchgeführt. Dies gilt in gleicher Weise für eine Überprüfung der Systemeinheiten auf Vollständigkeit und zuverlässiges Funktionieren.

Dies ist andereseits jedoch kritisch, denn wenn beispielsweise während eines Betriebszyklusses das Lichthärtgerät ausfällt, liegt eine unvollständige Härtung vor, die Haftungsrisiken birgt.

Demgegenüber liegt der Erfindung die Aufgabe zugrunde, ein Lichthärtgerät gemäß des Oberbegriffs von Anspruch 1 zu schaffen, das auch langfristig zuverlässig funktioniert, wobei dennoch auch eine fehlersichere Bedienung möglich sein soll.

Diese Aufgabe wird erfindungsgemäß durch Anspruch 1 gelöst. Vorteilhafte Weiterbildung ergeben sich aus den Unteransprüchen.

Erfindungsgemäß ist es vorgesehen, dass bei Annäherung einer Hand des Benutzers an das Lichthärtgerät dieses eingeschaltet wird. Bevorzugt wird die Hand des Benutzers hinsichtlich ihrer Kapazität von der Unterlage unterschieden. Dies bedeutet, dass die Einschaltung des Lichthärtgeräts in den Bereitschaftszustand nicht dann erfolgt, wenn sich das Lichthärtgerät der Unterlage nähert, sondern dann, wenn sich eine Hand dem Lichthärtgerät nähert.

In einer bevorzugten Ausführungsform ist der diesbezügliche Sensor als kapazitiver Näherungssensor ausgebildet. Er unterscheidet zwischen der Kapazität einer Hand oder eines Fingers des Benutzers und der Kapazität der Unterlage. Beispielsweise kann die Kapazität der Unterlage experimentell erfasst und in dem Lichthärtgerät abgespeichert werden. Eine Kapazitätsänderung um die Kapazität der Unterlage wird dann nicht als Einschaltsignal verwendet, hingegen sehr wohl die Einschaltung jedoch sehr wohl die Annäherung einer Hand und die diesbezügliche Kapazitätsänderung. Diese kann beispielsweise um 5 Picofarad betragen.

In günstiger Ausgestaltung ist es vorgesehen, dass der kapazitive Näherungssensor von einem aktiven Schild abgedeckt ist. Hierdurch lassen sich parasitäre Kapazitäten und externe Interferenzen vermeiden oder in ihrer Wirkung auf den Näherungssensor reduzieren.

Während eine auf Masse gelegte Abschirmung typischerweise eine parasitäre Kapazität darstellt, die die Signifikanz des gemessenen kapazitiven Signals des Näherungssensors verschleiert, lässt sich der aktive Schild so steuern, dass kein Spannungsunterschied zwischen dem aktiven Schild und dem kapazitiven Näherungssensor besteht. Die Schild-Elektrode schirmt gleichermaßen die Elektrode des Näherungssensors vor Umwelteinflüssen ab.

Ein besonders günstiger Effekt eines aktiven Schildes oder aktiven Schirmes ist die Möglichkeit, die Erfassungsrichtung des kapazitiven Sensors zu beeinflussen. Wenn der aktive Schirm unterhalb der Elektrode des kapazitiven Sensors angeordnet ist erfasst der kapazitive Sensor schwerpunktmäßig die Kapazitätsänderungen oberhalb der Elektrode.

Wenn der aktive Schirm sich auch noch etwas seitlich um die Sensor-Elektrode herum erstreckt, erfolgt eine noch stärkere Fokussierung auf den Bereich direkt oberhalb der Elektrode.

Erfindungsgemäß günstig in dem Zusammenhang ist es, den aktiven Schild unterhalb der Sensor-Elektrode zu platzieren, aber so, dass der aktive Schild jedenfalls nicht größer als die Elektrode ist, sondern etwas schmaler.

Diese Lösung hat die Wirkung, dass der Erfassungswinkel für eine Annäherung beispielsweise einer Hand eines Benutzers, aber auch eines sonstigen leitenden Gegenstandes, über einen Winkel von beispielsweise 160 Grad erfasst wird, also nahezu von überall her.

Die Elektrode erstreckt sich ferner bevorzugt länglich über einen wesentlichen Teil des Gehäuses der Lichthärtgeräts.

Eine weitere günstige Wirkung des aktiven Schirms ist die Möglichkeit, die Wirkung parasitärer Kapazitäten zu reduzieren. Im Gehäuse des Lichthärtgeräts liegen typischerweise leitende Elemente vor, beispielsweise die Steuerschaltung und deren Leiterbahnen und weiteren Leitungen, insbesondere auch solche, die auf Masse liegen.

Zwischen diesen elektrischen Leitern und der Sensor-Elektrode liegen typischerweise mehrere zueinander parallel geschaltete parasitäre Kapazitäten vor. Die zwischen diesen und der Sensor-Elektrode angeordnete aktive Schirm-Elektrode ermöglicht nun bei einer gleichmässigen Wechselspannungbeaufschlagung sowohl der Sensor-Elektrode als auch der Schirmelektrode, die parasitären Kapazitäten auszuschalten oder zu minimieren, typischerweise von beispielsweise 50 Picofarad auf 1-2 Picofarad.

Typischerweise wird das Lichthärtgerät bei Nicht-Benutzung auf einer Unterlage abgelegt. Je nach Form erfolgt die Ablage dann auf der Unterseite oder meist seitlich, zumindest dann, wenn ein endseitig abgekröpfter Lichtleitstab vorliegt, der dann die Ablage mit der Unterseite verhindert, wenn das Lichthärtgerät nicht in die Basisstation eingeführt wird.

Um nun zu erfassen, dass eine Ablage auf einer Unterlage wie einem Tisch erfolgt, kann zusätzlich ein kapazitiver Näherungssensor seitlich eingesetzt werden, der die Annäherung bespielsweise eines metallenen Tischs an das Lichthärtgerät bei dessen Ablage erfasst. Zweckmäßig erfolgt hier eine Differenzerfassung, also die Änderung der Kapazität an der Sensor- Elektrode und der Seiten-Elektrode und deren Verhältnis zueinander werden erfasst, um festzustellen, ob sich die Unterlage dem Lichthärtgerät annähert oder eine Hand des Benutzers.

Eine andere Möglichkeit besteht hier wiederum in dem entsprechenden Einsatz des aktiven Schirms. Durch dessen Ausgestaltung kann die Erfassungsfokussierung so erfolgen, dass lediglich eine Annäherung von oben, also von der Oberseite des Lichthärtgeräts, als signifikant erfasst wird.

Eine Ablage des Lichthärtgeräts auf dem 'Rücken' auf der Unterlage ist aber beispielsweise dann gar nicht möglich, wenn dem Lichthärtgerät eine typische gefällige Form mit gerundeter Oberseite gegeben wird, die dazu führen würde, dass das Lichthärtgerät auf die Seite kippt, wenn man versucht das Gerät auf der Oberseite abzulegen.

Auf diese Weise kann ebenfalls auf die Annäherung zwischen der Unterlage und der Annäherung der Hand des Benutzers unterschieden werden.

In einer weiteren möglichen Ausgestaltung ist es vorgesehen, eine Zusatz-Elektrode an der Unterseite des Lichthärtgeräts vorzunehmen , mit dem Ziel, die Annäherung der Basisstation zu erfassen. Dies ist günstig, wenn die Basisstation als Ablageschale ausgebildet ist, also ohne Aufladefunktion, während typischerweise bei einer Basisstation mit elektrischer Kontaktierung der Stromfluss beim Aufladen der Akkumulatoren des Lichthärtgeräts ohne weiteres erfasst werden kann.

Es versteht sich, dass auch die Zusatz-Elektroden in an sich bekannter Weise mit einem aktiven Schirm versehen sein können, mit den bereits zuvor beschriebenen und günstigen Wirkungen, zum einen parasitäre Kapazitäten zu vermeiden und zum anderen eine Fokussierung in der gewünschten Weise zu realisieren.

Wenn im Rahmen dieser Anmeldung von einer 'Sensor-Elektrode' oder entsprechendem die Rede ist, versteht es sich, dass tatsächlich eine entsprechende Elektroden-Anordnung gemeint ist. Eine kapazitive Sensor-Elektrode besteht typischerweise streng genommen aus mehreren Einzelelektroden, beispielsweise zwei Einzelektroden, zwischen denen ein elektrisches Feld aufgebaut wird, das durch die Wirkung eines Leiters wie eines menschliches Körperteil beeinflusst wird. Die kapazitive Elektrode erfasst insofern typischerweise eine Störung der elektrischen Feldlinien der Elektrodenanordnung.

Es versteht sich, dass dies sowohl für die - primäre - Sensor-Elektrode für die Erfassung der Hand des Benutzers als auch für die sekundären oder Zusatzelektroden für die Erfassung der Unterlage gilt.

In günstiger Ausgestaltung der Erfindung ist es vorgesehen, dass die Sensor-Elektrode Teil einer kapazitiven Brückenschaltung ist. In Ansicht bekannter Weise lässt sich aus einem Brückenungleichgewicht ableiten, dass eine Kapazitätsänderung an der betreffenden Elektrode stattgefunden hat.

Weitere Vorteile, Einzeheiten und Merkmale ergeben sich aus der nachfolgenden Beschreibung mehrerer Ausführungsbeispiele der Erfindung anhand der Zeichnung.

Es zeigen:
- Fig. 1: eine schematische Ansicht eines erfindungsgemäßen Lichthärtgeräts, aufgenommen an einer Basisstation für das Lichthärtgerät;
- Fig. 2: eine schematische Schnittansicht durch eine weitere Ausführungsform eines erfindungsgemäßen Lichthärtgeräts;
- Fig. 3: eine schematische Schnittanischt durch eine dritte Ausführungsform eines erfindungsgemäßen Lichthärtgeräts;

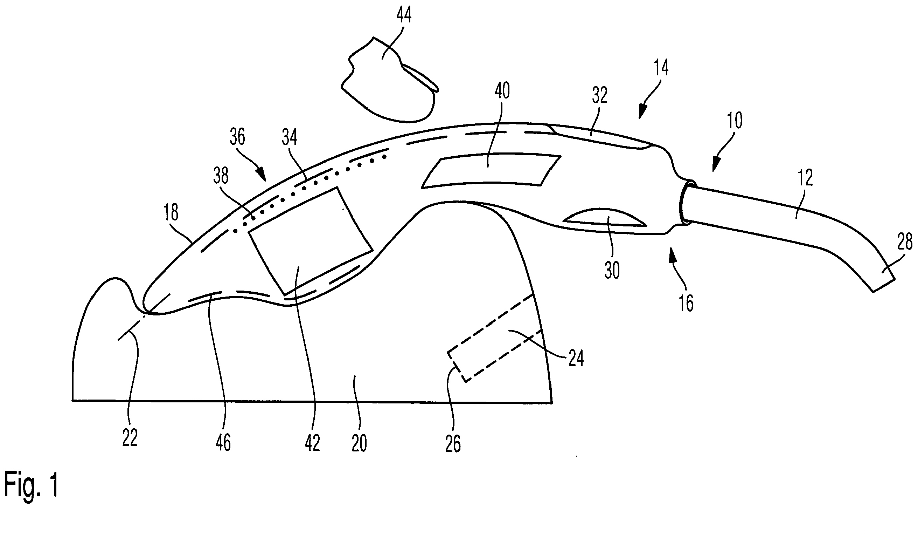

Das in Fig. 1 schematisch dargestellte Lichthärtgerät 10 weist einen Lichtleitstab 12 sowie ein Gehäuse 14 auf. Der Lichtleitstab 12 ist am vorderen Ende 16 des Gehäuses steckbar angebracht und in an sich bekannter Weise im Winkel von etwa 45 Grad nach unten abgekröpft.

Das Lichthärtgerät 10 weist einen gefälligen und zugleich bedienungsfreundlichen Grundaufbau auf. Hierzu gehört eine ballige oder gerundete Oberwand 18 des Gehäuses 14. In der dargestellten Position ist das Lichthärtgerät 10 in einer Basisstation 20 abgestützt und aufgenommen. Die Basisstation 20 ist als Ladeschale ausgebildet und weist schematisch dargestellte Steckkontakte 22 auf, die Akkumulatoren in dem Lichthärtgerät 10 aufladen, wenn es in der Basisstation 20 liegt.

Die Basisstation 20 ist an ihrer Oberseite schalenförmig ausgebildet, so dass eine längliche Vertiefung das Gehäuse 14 des Lichthärtgeräts zum großen Teil aufnimmt. Zudem weist die Basisstation 20 an ihrer Vorderseite eine Öffnung 24 auf. Die Öffnung 24 ist mit einem Kalibrier-Sensor 26 ausgerüstet, der eine Kalibrierung des Lichthärtgeräts 10 ermöglicht.

Hierzu wird das Lichthärtgerät 20 mit dem vorderen Ende 28 des Lichtleitstabs 12 in die Öffnung 22 eingesteckt und das Lichthärtgerät eingeschaltet. Mit einem Kalibrier-Programm verfolgt dann in an sich bekannter Weise die Kalibrierung;

Die Öffnung 24 ist nach unten hin ebenfalls offen, also im wesentlichen schlitzförmig, was verhindert, dass der Kalibriersensor verschmutzt, wie es bei einer sacklochartigen Öffnung der Fall sein könnte. Zudem kann der Kalibrier-Sensor 26 bei Bedarf von unten leicht gereinigt werden.

Das Lichthärtgerät 10 weist ferner an dem Gehäuse 14 einen Schalter 30 sowie ein Display 32 auf. Das Gehäuse 14 ist im wesentlichen stiftförmig, jedoch mit einer Annäherung an die Pistolenform, und lässt sich typischerweise so halten, dass eine Hand das Gehäuse 14 von oben übergreift. Der schräg an der Unterseite angebrachte Schalter 30 oder Auslöseknopf lässt sich dann beispielsweise mit dem Zeigefinger des Benutzers bedienen, während das Display 32 gut sichtbar im Sichtfeld des Benutzers ist.

Das Gehäuse 14 besteht aus elektrisch isolierendem Material wie beispielsweise ABS oder einem anderem geeigneten Kunststoff. An der Oberwand ist erfindungsgemäß eine Elektrode 34 angebracht, die sich an die Oberwand 18 anlehnt und sich von einem rückwärtigen Bereich bis zum Display oder knapp davor erstreckt. Die Elektrode 34 erstreckt sich innen an dem Gehäuse, entweder als aufgedampfte Schicht oder als metallische Fläche. Die Elektrode 34 dient zugleich als Näherungssensor 36. Sie ist mit einem aktiven Schirm 38 abgeschirmt, der sich ebenfalls an der Oberwand 18 entlang erstreckt, jedoch unterhalb der Elektrode 34.

Eine Steuerschaltung 40 ist in der Mitte des Gehäuses 14 aufgenommen, jedenfalls deuttlich vor Akkumulatoren 42, die aufgrund ihres Gewichtes ein Gegengewicht bei der Handhabung des Lichthärtgeräts 14 bildet, was ergonomische Vorteile bietet. Bei Annäherung eines Fingers 44 des Benutzers wird nun die Kapazitätsänderung im Umfeld der Elektrode 34 und damit des Näherungssensors 36 erfasst. Diese Kapazitätsänderung führt dazu, dass die Steuerschaltung 40 das Lichthärtgerät einschaltet, und zwar bevorzugt in einen Bereitschaftmodus, in welchem es für die Durchführung eines Lichthärtzyklus bei Betätigung des Schalters 30 bereit ist.

In dem dargestelltem Ausführungsbeispiel ist an der Unterseite des Gehäuses 14 eine Zusatz-Elektrode 46 angeordnet, die erfassen soll, ob das Lichthärtgerät 10 in der Basisstation 20 oder aber beispielsweise auf einem Tisch abgelegt ist. Wenn die Basisstation 20 mit Steckkontakten 22 ausgestattet ist, kann das Ablegen in der Basisstation als Ladeschale auch elektrisch erfasst werden.

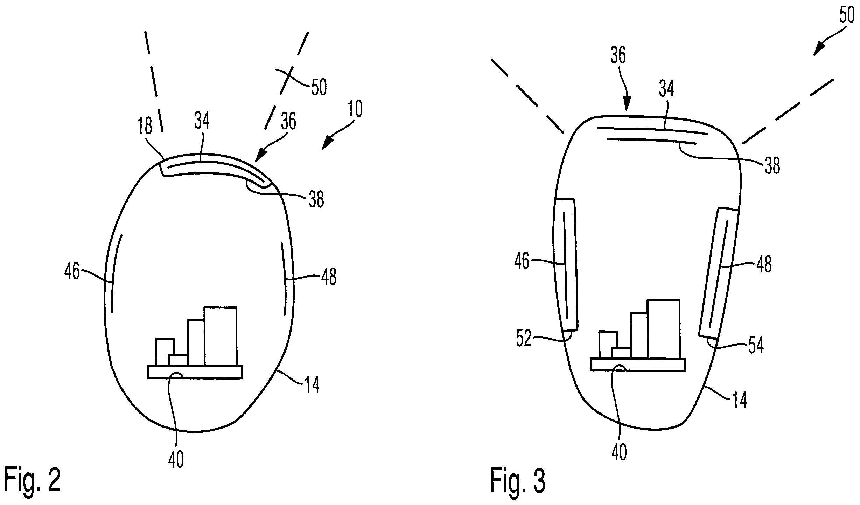

Gemäß Fig. 2 ist eine weitere Ausführungsform eines erfindungsgemäßen Lichthärtgeräts 10 im Schnitt dargestellt. Gleiche Bezugszeichen weisen hier wie auch in der weiteren Fig. auf gleiche Teile hin. In der dargestellten Ausführungsform gemäß Fig. 2 sind zwei Zusatz-Elektroden 46 und 48 seitlich vorgesehen. Die Haupt-Elektrode 34 ist oben angeordnet, an der Oberwand 18 des Gehäuses 14. Sie ist von einem aktiven Schirm 38 nach innen abgedeckt. In dieser Ausführungsform erstreckt sich der aktive Schirm 38 im wesentlichen U-förmig um die Elektrode 34 herum. Hierdurch ergibt sich ein schmalerer Erfassungswinkel 50, so dass der Sensor 36 nur dann aktiv wird und die Hand eines Benutzers anzeigt, sobald diese sich von oben nähert.

Aufgrund seiner Form, die im Querschnitt hochoval ist, würde sich das Lichthärtgerät bei Ablage auf einer leitenden Unterlage wie einem Tisch zur Seite rollen. In diesem Fall nähert sich der Tisch entweder der Zusatz-Elektrode 46 oder der Zusatz-Elektrode 48 an.

Dies wird von der zugehörigen Steuerschaltung 40 erkannt, so dass die Steuerschaltung nicht durch die Annäherung des Tischs versehentlich das Lichthärtgerät in den Bereitschaftsmodus schaltet.

Eine weitere Ausführungsform ist aus Fig. 3 ersichtlich. Hier ist der Querschnitt des Gehäuses etwas V-förmiger, jedoch im wesentlichen ebenfalls hochoval. Bei dieser Ausführungsform sind die Zusatz-Elektroden 46 und 48 durch zusätzliche aktive Schirme 52 und 54 abgeschirmt, sodass die Empfindlichkeit der Zusatz-Elektroden 46 und 48 ebenfalls sehr hoch ist.

Bei der Ausführungsform gemäß Fig. 3 ist der aktive Schirm 38 für die Haupt-Elektrode 34 etwas verkürzt. Dies führt dazu, dass der aktive Erfassungsbereich 50 einen breiteren Erfassungswinkel aufweist, so dass auch eine sich seitlich annähernde Hand den Bereitschaftsmodus anschaltet.

Es versteht sich, dass die erfindungsgemäße Schaltfunktion auch zu weiteren Steuerungsmöglichkeiten ausgenutzt werden kann. Beispielsweise können auch mehrere Elektroden an dem Gehäuse 14 verteilt angeordnet sein, und je nach Reihenfolge der Betätigung lassen sich unterschiedliche Betriebsmodi des Geräts einschalten.

## Patentansprüche

1. Lichthärtgerät umfassend eine Steuerschaltung, über welche das Lichthärtgerät einschaltbar und/oder ausschaltbar ist, insbesondere aus einem Bereitschaftsmodus in einen Betriebsmodus und zurück, und einen Sensor für die Auslösung des Einschaltens und/oder des Ausschaltens, **dadurch gekennzeichnet, dass** der Sensor als kapazitiver Näherungssensor (36) ausgebildet ist, der eine Empfindlichkeit von weniger als 1 pF aufweist, und dass die Steuerschaltung (40) zwischen der Annäherung einer Hand des Benutzers an das Lichthärtgerät (10) und der Annäherung des Lichthärtgeräts an eine Unterlage unterscheidet.

2. Lichthärtgerät nach Anspruch 1, **dadurch gekennzeichnet, dass** die Steuerschaltung (40) ein elektrisches Wechselfeld um das Lichthärtgerät (10) aufbaut.

3. Lichthärtgerät nach einem der vorhergehenden Ansprüche, **dadurch gekennzeichnet, dass** der Sensor (36) in dem auf einer Unterlage abgelegten Zustand des Lichthärtgeräts eine Kapazität aufweist, und dass die Steuerschaltung eine Kapazitätsänderung gegenüber dieser Kapazität im Bereich von weniger als 1 pF, insbesondere weniger als 100 fF erfasst.

4. Lichthärtgerät nach einem der vorhergehenden Ansprüche, **dadurch gekennzeichnet, dass** der Sensor (36) Teil einer kapazitiven Brückenschaltung ist und die Steuerschaltung (40) ein Ungleichgewicht der Brückenschaltung erfasst.

5. Lichthärtgerät nach Anspruch 4, **dadurch gekennzeichnet, dass** der Sensor (36) und insbesondere weitere Teile einer Brückenschaltung je mit einer Elektrode (34) verbunden sind oder diese aufweisen, die, vom Lichthärtgerät (10) aus betrachtet, je nach außen weist.

6. Lichthärtgerät nach einem der vorhergehenden Ansprüche, **dadurch gekennzeichnet, dass** die Steuerschaltung (40) eine Schaltschwelle aufweist, ab welcher eine Kapazitätsänderung als Annäherung eines Benutzers festgelegt wird und das Lichthärtgerät (10) in den Betriebsmodus schaltet.

7. Lichthärtgerät nach einem der vorhergehenden Ansprüche, **dadurch gekennzeichnet, dass** der Sensor bei Kapazitätsänderung der Umgebung des Lichthärtgeräts (10) durch Annäherung einer Hand auf einen vorgegebenen Wert, insbesondere etwa 5 oder 10 cm, eine Einschaltung des Lichthärtgeräts vornimmt.

8. Lichthärtgerät nach einem der vorhergehenden Ansprüche, **dadurch gekennzeichnet, dass** das Lichthärtgerät (10) über eine abgeschirmte Leitung mit der Elektrode (34) des Sensors (36) verbunden ist.

9. Lichthärtgerät nach Anspruch 8, **dadurch gekennzeichnet, dass** die abgeschirmte Leitung nach dem Prinzip eines aktiven Schildes betrieben ist, der Umgebungseinflüsse kompensiert.

10. Lichthärtgerät nach einem der vorhergehenden Ansprüche, **dadurch gekennzeichnet, dass** die Elektrode (34) Teil einer Kapazitätsbrücke ist und jeder Teil über eine abgeschirmte Leitung, insbesondere eine aktiv geschirmte Leitung, mit der Steuerschaltung (40) verbunden ist.

11. Lichthärtgerät nach einem der vorhergehenden Ansprüche, **dadurch gekennzeichnet, dass** ein erster kapazitiver Näherungssensor (36) auf oder an einer Oberseite oder Oberwand (18) des Lichthärtgeräts (10) angeordnet ist.

12. Lichthärtgerät nach einem der vorhergehenden Ansprüche, **dadurch gekennzeichnet, dass** ein Zusatz-Näherungssensor (36) auf einer Unterseite des Lichthärtgeräts (10) angeordnet ist und mit der Steuerschaltung (40) in Verbindung ist und dass die Steuerschaltung (40) das Lichthärtgerät ausschaltet, wenn der Zusatz-Näherungssensor (Elektroden 46 und 48) die Nähe der Unterlage signalisiert.

13. Lichthärtgerät nach einem der vorhergehenden Ansprüche, **dadurch gekennzeichnet, dass** der kapazitive Näherungssensor von einem aktivem Schild (38) abgedeckt ist, der Umwelteinflüsse in ihrer Wirkung auf den kapazitiven Näherungssensor (36) reduziert.

14. Lichthärtgerät nach einem der vorhergehenden Ansprüche, **dadurch gekennzeichnet, dass** das Lichthärtgerät mehrere Elektroden aufweist und die Steuerschaltung (40) des Lichthärtgeräts (10) in Abhängigkeit von der Reihenfolge der Erfassung von Signalen an den Elektroden des kapazitiven Sensors den jeweiligen Betriebsmodus festlegt.

## Claims

1. A light curing apparatus comprising a control circuit by which the light curing apparatus can be switched on and/or off, in particular from a standby mode to an operating mode and vice versa, and a sensor to cause switching on and/or switching off, **characterized in that** the light curing apparatus Is provided with a sensor to cause switching on and/or switching off, **in that** the sensor is designed as a capacitive proximity sensor (36) which has a sensitivity of less than 1 pF, and **in that** the control circuit (40) distinguishes between the approach of a user's hand to the light curing device (10) and the approach of the light curing device to a support.

2. The light curing apparatus according to claim 1, **characterized in that** the control circuit (40) generates an alternating electric field around the light curing apparatus (10).

3. The Light curing apparatus according to one of the preceding claims, **characterized in that** the sensor (36) has a capacitance in the state wherein the light curing apparatus is deposited on a support, and **in that** the control circuit detects a change of capacitance with respect to that capacitance in the range of less than 1 pF, in particular less than 100 fF.

4. The light curing apparatus according to one of the preceding claims, **characterized in that** the sensor (36) is part of a capacitive bridge circuit and the control circuit (40) detects an Imbalance of the bridge circuit.

5. The light-curing device according to Claim 4, **characterized in that** the sensor (36) and in particular other parts of a bridge circuit are each connected to or have an electrode (34) which, as viewed from the light-curing device (10), faces outwards.

6. The light curing apparatus according to one of the preceding claims, **characterized in that** the control circuit (40) has a switching threshold starting from which a change in capacity is set as an approach of a user, and the light curing apparatus (10) switches to the operating mode.

7. The light curing apparatus according to one of the preceding claims, **characterized in that** the sensor performs switching on the light curing apparatus, as the capacitance of the surroundings of the light curing apparatus (10) is changed to a predetermined value, in particular about 5 or 10 cm, by approach a hand.

8. The light-curing apparatus according to one of the preceding claims, **characterized in that** the light-curing apparatus (10) is connected to the electrode (34) of the sensor (36) via a shielded line.

9. The light curing apparatus according to claim 8, **characterized in that** the shielded line is operated according to the principle of an active shield which compensates for environmental influences.

10. The light curing apparatus according to one of the preceding claims, **characterized in that** the electrode (34) is part of a capacitance bridge and each part is connected to the control circuit (40) via a shielded line, in particular an actively shielded line.

11. The light curing apparatus according to one of the preceding claims, **characterized in that** a first capacitive proximity sensor (36) is arranged on or at a top side or upper wall (18) of the light curing apparatus (10).

12. The light curing apparatus according to one of the preceding claims, **characterized in that** an auxiliary proximity sensor (36) is arranged on a bottom side of the light curing apparatus (10) and is In communication with the control circuit (40), and **in that** the control circuit (40) switches off the light curing apparatus when the auxiliary proximity sensor (electrodes 46 and 48) indicates proximity of the base.

13. The light curing apparatus according to one of the preceding claims, **characterized in that** the capacitive proximity sensor is covered by an active shield (38) which reduces environmental influences to the capacitive proximity sensor (36).

14. The light curing apparatus according to one of the preceding claims, **characterized In that** the light curing apparatus has a plurality of electrodes and the control circuit (40) of the light curing apparatus (10) determines the respective operating mode as a function of the sequence in which signals are detected by the electrodes of the capacitive sensor.

## Revendications

1. Dispositif de photopolymérisation, comprenant un circuit de commande, par lequel le dispositif de photopolymérisation peut être activé et/ou désactivé, en particulier à partir d'un mode veille un un mode opérationnel et vice versa, et un capteur pour déclencher l'activation et/ou la désactivation, **caractérisé en ce que** le capteur est configuré comme capteur de proximité capacitif, qui présente une sensibilité d'au moins 1 pF, et que le circuit de commande (40) différencie entre le rapprochement d'une main de l'opérateur au dispositif de photopolymérisation de périphérique (10) et le rapprochement du dispositif de photopolymérisation à un support.

2. Dispositif de photopolymérisation selon la revendication 1, **caractérisé en ce que** le circuit de commande (40) génère un champ électrique autour du dispositif de photopolymérisation (10).

3. Dispositif de photopolymérisation selon l'une des revendications précédentes, **caractérisé en ce que** dans un état où le dispositif de photopolymérisation est déposé sur une surface le capteur (36) dispose d'une capacité, et que le circuit de commande saisit une variation de capacité par rapport à cette capacité dans la gamme inférieure à 1 pF en particulier moins de 100 pF.

4. Dispositif de photopolymérisation selon l'une des revendications précédentes, **caractérisé en ce que** le capteur fait partie (36) d'un circuit en pont capacitif et le circuit de commande (40) saisit un déséquilibre du circuit en pont.

5. Dispositif de photopolymérisation selon la revendication 4, **caractérisé en ce que** le capteur (36) et en particulier d'autres pièces d'un circuit de pont sont reliés respectivement à une électrode (34) ou en dispose d'une, qui est respectivement dirigée vers l'extérieur par rapport au dispositif de photopolymérisation (10).

6. Dispositif de photopolymérisation selon l'une des revendications précédentes, **caractérisé en ce que** le circuit de commande (40) présente un seuil de commutation, à partir duquel une variation de capacité est déterminée comme rapprochement d'un opérateur et active le mode de fonctionnement du dispositif de photopolymérisation (10).

7. Dispositif de photopolymérisation selon l'une des revendications précédentes, **caractérisé en ce que**, lors d'une variation de la capacité à une valeur prédéterminée, en particulier environ 5 ou 10 cm, dans l'environnement du dispositif de photopolymérisation (10) par le rapprochement d'une main, le capteur effectue l'activation du dispositif de photopolymérisation.

8. Dispositif de photopolymérisation selon l'une des revendications précédentes, **caractérisé en ce que** le dispositif de photopolymérisation (10) est relié à l'électrode (34) du capteur (36)par un câble blindé.

9. Dispositif de photopolymérisation selon la revendication 8, **caractérisé en ce que** le câble blindé est opéré selon le principe d'un bouclier actif, qui compense les Influences de l'environnement.

10. Dispositif de photopolymérisation selon l'une des revendications précédentes, **caractérisé en ce que** l'électrode (34) appartient à un pont capacitif et chaque partie est reliée par un câble blindé, en particulier un câble blindé à blindage actif, au circuit de commande (40).

11. Dispositif de photopolymérisation selon l'une des revendications précédentes, **caractérisé en ce qu'**un premier capteur de proximité capacitif (36) est disposé sur ou dans une surface supérieure ou paroi supérieure (18) du dispositif de photopolymérisation (10).

12. Dispositif de photopolymérisation selon l'une des revendications précédentes, **caractérisé en ce qu'**un capteur de proximité supplémentaire (36) est disposé sur la surface inférieur du dispositif de photopolymérisation (10) et est en connexion avec le circuit de commande (40) et que le circuit de commande (40) désactive le dispositif de photopolymérisation lorsque le capteur de proximité supplémentaire (électrode 46 et 48) indique la proximité du support.

13. Dispositif de photopolymérisation selon l'une des revendications précédentes, **caractérisé en ce que** le capteur de proximité capacitif est couvert par un bouclier actif (38), qui réduit l'influence environnementale dans son effet sur le capteur de proximité capacitif (36).

14. Dispositif de photopolymérisation selon l'une des revendications précédentes, **caractérisé en ce que** le dispositif de photopolymérisation présente plusieurs électrodes et le circuit de commande (40) du dispositif de photopolymérisation (10) définit le mode de fonctionnement respectif selon l'ordre de saisi des signaux sur les électrodes du capteur capacitif.
